(19) Europäisches Patentamt
European Patent Office
Office européen des brevets

(11) **EP 2 271 595 B1**

(12) **FASCICULE DE BREVET EUROPEEN**

(45) Date de publication et mention
de la délivrance du brevet:
**19.12.2018 Bulletin 2018/51**

(21) Numéro de dépôt: **09738350.9**

(22) Date de dépôt: **21.04.2009**

(51) Int Cl.:
**C04B 26/06** (2006.01)     **C04B 26/02** (2006.01)
C04B 111/00 (2006.01)     C04B 111/52 (2006.01)

(86) Numéro de dépôt international:
**PCT/FR2009/000466**

(87) Numéro de publication internationale:
**WO 2009/133316 (05.11.2009 Gazette 2009/45)**

(54) **ENDUIT DE FINITION CONVENANT POUR SUPPORT ACOUSTIQUE**

ENDBEARBEITUNGSMASSE, DIE FÜR EINEN AKUSTISCHEN TRÄGER GEEIGNET IST

FINISHING COMPOUND SUITABLE FOR AN ACOUSTIC SUPPORT

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **22.04.2008 FR 0802224**

(43) Date de publication de la demande:
**12.01.2011 Bulletin 2011/02**

(73) Titulaire: **Etex Building Performance International
SAS
84000 Avignon (FR)**

(72) Inventeurs:
• **SERRE, Florence
F-38460 Moras (FR)**
• **FADDOUL, Rita
F-38000 Grenoble (FR)**

• **FAURE, Jean-Michel
F-69600 Oullins (FR)**
• **STOCK, Claude
F-34860 Soleymieu (FR)**

(74) Mandataire: **Vaeck, Elke et al
Etex Services NV
Kuiermansstraat 1
1880 Kapelle-op-den-Bos (BE)**

(56) Documents cités:
EP-A- 1 143 085         WO-A-96/32450
WO-A-2007/100510     DE-A1- 4 324 314
DE-A1- 19 614 296     US-A- 4 559 377
US-A- 5 338 349         US-A1- 2004 168 399
US-A1- 2005 139 126

**Description**

La présente invention a pour objet un enduit de finition ayant des propriétés acoustiques.

Les enduits de finition, également appelés enduits de décoration ou encore revêtements de finition ou de décoration, sont généralement utilisés pour revêtir un support afin de lui donner la finition souhaitée correspondant à des critères esthétiques définis.

Or lorsque l'on veut décorer ou améliorer l'esthétique des supports présentant des propriétés acoustiques, il convient d'utiliser des enduits de finition spécifiques qui ne vont pas perturber ou altérer les propriétés acoustiques de leurs supports. Notamment il convient de ne pas obturer la porosité des supports présentant des propriétés acoustiques. En d'autres termes, tous les enduits de finition ne conviennent pas si on veut préserver les propriétés acoustiques du support sur lequel ils sont appliqués. Notamment dans le cas des panneaux acoustiques absorbants utilisés pour réaliser des faux plafonds, il convient d'utiliser des enduits de finition spécifiques.

La demande de brevet DE 196 14 296 décrit une masse d'enduction poreuse acoustique contentant une fraction granulée et un liant. La masse d'enduction décrite comprend de 65 à 95% en poids de fraction granulée comprenant 10% maximum d'une proportion de matières fines dont les tailles de grains est inférieure à 0.1 mm.

Le brevet US 5,338, 349 décrit une composition ignifuge et thermorésistante comprenant des matériaux carbonates, d'aluminosilicate, et de talc présentant des tailles de particules différentes.

Afin de répondre aux exigences des industriels il est devenu nécessaire de trouver un enduit de finition ayant des propriétés acoustiques améliorées.

Aussi le problème que se propose de résoudre l'invention est de fournir un produit ayant des propriétés acoustiques et utilisable en tant qu'enduit de finition.

Dans ce but la présente invention propose un produit comprenant en pourcentage en poids par rapport au poids total du produit, au moins

- 25 à 80 % d'eau ;
- 0,1 à 5 % d'agent épaississant;
- 0,01 à 0,8 % d'agent dispersant ;
- 10 à 60 % de charge monogranulaire dont le $D_{50}$ est supérieur ou égal à 100 $\mu$m ;
- 0,5 à 6 % de liant ;

et ne comprenant ni d'agent moussant ni des charges fines dont le diamètre médian $D_{50}$ est strictement inférieur à 100 $\mu$m.

La présente invention propose également, un enduit de finition comprenant le produit décrit ci-avant. La présente invention a aussi pour objet une plaque de plâtre sur laquelle est appliqué l'enduit de finition selon l'invention.

Enfin, la présente invention a pour objet l'utilisation d'un enduit de finition selon l'invention pour la fabrication d'éléments pour le domaine de la construction.

L'invention offre des avantages déterminants, en particulier le produit selon l'invention préserve les propriétés acoustiques du support sur lequel il est appliqué.

Avantageusement, le produit selon l'invention peut être utilisé comme enduit de finition pour tout type de plaques de plafond, et en particulier les plaques de plâtre pour plafond.

L'invention offre comme autre avantage que le produit selon l'invention peut être employé soit pour ses propriétés acoustiques et / ou pour ses propriétés esthétiques.

Un autre avantage de la présente invention, est que l'enduit comprend une teneur élevée en eau, ce qui assure une bonne maniabilité de l'enduit, et facilite l'application de l'enduit au cours du chantier.

Un autre avantage de la présente invention est que le produit selon l'invention peut être appliqué en monocouche, c'est à dire que l'application d'une seule couche de produit selon l'invention suffit pour obtenir les propriétés acoustiques et / ou les propriétés esthétiques nécessaires.

De plus, le produit selon l'invention présente comme avantage qu'il possède un grand pouvoir couvrant ou garnissant, ce qui permet de masquer les joints faits avec un enduit de jointoiement.

De manière tout à fait avantageuse, le produit selon l'invention convient comme enduit de finition pour plafond monolithique. Par plafond monolithique, on entend au sens de l'invention un plafond constitué d'un seul élément. Par exemple il peut s'agir d'un plafond comprenant plusieurs plaques de plâtre solidarisées par un joint et recouvertes d'un enduit de finition, le tout ayant une apparence monolithique, c'est-à-dire constitué d'un seul élément.

Enfin l'invention a pour avantage de pouvoir être mise en oeuvre dans toutes industries, notamment l'industrie du bâtiment et dans l'ensemble des marchés de la construction (bâtiment, génie civil ou usine de préfabrication), dans l'industrie des éléments pour le domaine de la construction, l'industrie de la construction d'éléments en plâtre.

D'autres avantages et caractéristiques de l'invention apparaîtront clairement à la lecture de la description et des exemples donnés à titre purement illustratifs et non limitatifs qui vont suivre.

Par l'expression « propriétés acoustiques», on entend aussi bien :

- la capacité à absorber les ondes sonores,
- la capacité à dissiper l'énergie des ondes sonores,
- la capacité à laisser passer les ondes sonores,
- la perméabilité aux ondes sonores,
- la transparence aux ondes sonores,
- la capacité à réduire ou supprimer la réverbération des ondes sonores, ou
- la capacité à réfléchir au minimum les ondes sonores.

Par l'expression « liants », on entend selon la présente invention tout composé ayant la propriété d'apporter de la cohésion à la formulation dans laquelle il est incorporé. Ce liant est destiné à lier des éléments inertes tels que des fibres ou des charges granulaires.

Par l'expression « agent antimousse », on entend selon la présente invention tout composé ayant la propriété d'empêcher ou d'éviter la formation de la dispersion d'une phase gazeuse dans un liquide, un semi-liquide, un semi-solide ou un solide, en particulier empêcher ou éviter la formation d'une mouse.

Par l'expression « agent mouillant », on entend selon la présente invention tout composé ayant la propriété de modifier la tension superficielle d'un liquide pour favoriser la dispersion des fibres ou d'éviter que les fibres floculent.

Par l'expression « agent épaississant », on entend selon la présente invention tout composé permettant ou facilitant le maintien en équilibre de phases physiques hétérogènes.

Par l'expression « gomme », on entend selon l'invention des exsudats végétaux ou des sécrétions extracellulaires d'origine microbiologique.

Par l'expression « $D_{50}$ », on entend selon l'invention le diamètre médian des particules dans une distribution granulométrique cumulée en volume (le diamètre médian divise la distribution en deux parts égales, 50% en volume des particules ont une taille inférieure au $D_{50}$ et 50% en volume des particules ont une taille supérieure au $D_{50}$).

Par l'expression "charge monogranulaire", on entend au sens de l'invention une charge monodisperse. Par monodisperse on entend une charge dont l'ensemble des particules qui la compose, possède la même taille. Cela signifie en d'autres termes que la représentation graphique de la distribution granulométrique de la taille des particules (pourcentage en volume en fonction de la taille) ne présente qu'un seul pic (une seule population). Cette définition de "charge monogranulaire" exclue un mélange de particules de taille différentes ou exclue un empilement granulaire de plusieurs particules de tailles différentes.

Le produit selon l'invention ne contient pas de charges fines. Par l'expression « charges fines», on entend selon l'invention des particules donc le diamètre médian $D_{50}$ est strictement inférieur à 100 $\mu$m.

Par l'expression éléments pour le domaine de la construction, on entend selon la présente invention tout élément constitutif d'une construction comme par exemple un sol, une chape, une fondation, un mur, une cloison, un plafond, une poutre, un plan de travail, un pilier, une pile de pont, un parpaing, un tuyau, un poteau, une corniche, un élément de voirie (par exemple une bordure de trottoir), une tuile.

Tout d'abord la présente invention propose un produit comprenant en pourcentage en poids par rapport au poids total du produit, au moins

- 25 à 80 % d'eau ;
- 0,1 à 5 % d'agent épaississant;
- 0,01 à 0,8 % d'agent dispersant ;
- 10 à 60 % de charge monogranulaire dont le $D_{50}$ est supérieur ou égal à 100 $\mu$m,
- 0,5 à 6 % de liant ;

et ne comprenant ni d'agent moussant ni des charges fines dont le diamètre médian $D_{50}$ est strictement inférieur à 100 $\mu$m.

De préférence le produit selon l'invention, après séchage, est un produit poreux ou perméable à l'air.

De préférence le produit selon l'invention, après évaporation de l'eau, est un produit poreux ou perméable à l'air.

De préférence le produit selon l'invention présente une perméabilité à l'air, après évaporation de l'eau, comprise entre 800 et 6000 mks Rayls. Le produit selon l'invention comprend de 25 à 80 % d'eau, de préférence de 30 à 70 %, plus préférentiellement de 35 à 60 %, encore plus préférentiellement de 40 à 50 % pourcentage en poids par rapport au poids total du produit. L'eau convenant selon l'invention peut être l'eau du robinet.

Selon une variante de l'invention, le produit peut comprendre de 0,001 à 10 % d'agent antimousse, de préférence de 0,1 à 5 % d'agent antimousse, pourcentage en poids par rapport au poids total du produit.

Le produit selon l'invention comprend de 0,1 à 5 % d'agent épaississant, de préférence de 0,5 à 2,5 % d'agent épaississant, encore plus préférentiellement de 0,5 à 1,5 % d'agent épaississant, pourcentage en poids par rapport au poids total du produit.

Les agents épaississants convenant selon l'invention sont de préférence des gommes, de la cellulose et ses dérivés comme des éthers de cellulose ou la carboxyméthylcellulose, de l'amidon et ses dérivés, la gélatine, l'agar, les carraghénanes.

De préférence le produit selon l'invention comprend des gommes en tant qu'agent épaississant.

Les gommes en tant qu'agent épaississant convenant selon l'invention sont de préférence choisies parmi les gommes Acacia, Adragante, Caroube, Dextrane, Diutane, Gellane, Guar, Scléroglucane, Xanthane, Welane.

La gomme préférée selon l'invention en tant qu'agent épaississant est la gomme xanthane.

Le produit selon l'invention comprend de 0,01 à 0,8 % d'agent dispersant, de préférence 0,1 à 0,5 % d'agent dispersant, encore plus préférentiellement 0,1 à 0,25 %, pourcentage en poids par rapport au poids total du produit.

Le produit selon l'invention comprend de 10 à 60 % de charge monogranulaire dont le $D_{50}$ est supérieur ou égal à 100 $\mu$m, en particulier de 20 à 55 % de charge monogranulaire, de préférence de 30 à 50 % de charge monogranulaire, plus préférentiellement 35 à 50 %, et enfin encore plus préférentiellement 40 à 45 %, pourcentage en poids par rapport au poids total du produit.

Les charges monogranulaires convenant selon l'invention sont de préférence du carbonate de calcium, de la dolomite (carbonate de calcium et de magnésium), de la silice, du talc, du mica, du sulfate de calcium anhydre ou dihydraté, du sulfate de baryum ou leur mélange. Selon une variante de l'invention les charges monogranulaires convenant selon l'invention peuvent être un mélange de carbonate de calcium et de billes de verre, étant entendu que le pourcentage de billes de verre est inférieur ou égal à 14%, en pourcentage en poids par rapport au poids total du produit. Selon une autre variante de l'invention les charges monogranulaires convenant selon l'invention ne comprennent pas de billes de verre.

De préférence, les charges monogranulaires convenant selon l'invention sont du carbonate de calcium en tant que charge monogranulaire. Plus particulièrement, le carbonate de calcium convenant selon l'invention possède un $D_{50}$ supérieur ou égal à 100 $\mu$m, de préférence compris entre 100 $\mu$m et 2 mm, plus préférentiellement compris entre 110 $\mu$m et 500 $\mu$m, encore plus préférentiellement compris entre 120 $\mu$m et 250 $\mu$m. Enfin le carbonate de calcium préféré selon l'invention possède un $D_{50}$ égal à 200 $\mu$m. ces valeurs étant mesurées par diffraction laser, de préférence, à l'aide d'un appareil du type granulomètre Malvern MS2000 en voie sèche.

Le produit selon l'invention peut comprendre en outre de 0,1 à 5 % de fibres synthétiques ou animales, de préférence de 1 à 3 % de fibres synthétiques ou animales, pourcentage en poids par rapport au poids total du produit. Les fibres synthétiques convenant selon l'invention peuvent être des fibres de polyamide, des fibres de polypropylène, des fibres de polyester, des fibres de polyacrylonitrile. Les fibres préférées selon l'invention sont des fibres synthétiques, en particulier des fibres de polyamide.

De préférence, le produit selon l'invention ne contient pas de fibres végétales.

Le produit selon l'invention comprend de 0,5 à 6 % de liant, de préférence de 1,0 à 5 % de liant, plus préférentiellement 1,5 à 4 %, encore plus préférentiellement 1,5 à 2 %, pourcentage en poids par rapport au poids total du produit. Le liant permet d'assurer la cohésion du produit selon l'invention. Le liant convenant selon l'invention peut être un polymère acrylique, un polymère styrène acrylique, un polymère vinylique, leur mélange et leurs dérivés. Le liant préféré selon l'invention est un polymère acrylique, en particulier un polymère styrène acrylique.

Le produit selon l'invention peut comprendre en outre des additifs supplémentaires, comme par exemple des agents mouillants, des agents coalescents, des agents fluidifiants, des agents bactéricides, des agents fongicides, des solvants lourds, des pigments, des pigments photocatalytiques.

Selon une variante de l'invention, le produit peut comprendre en outre de 0,05 à 1 % d'agent mouillant.

Les agents mouillants convenant selon l'invention sont de préférence des alcools, des polyols et en particulier des diols.

Selon une autre variante de l'invention, le produit peut comprendre en outre de 0,01 à 5 % d'agent coalescent.

Les agents coalescents convenant selon l'invention sont de préférence des ethers de glycols.

Le produit selon l'invention peut comprendre en outre un solvant lourd. Les solvants lourds convenant selon l'invention sont de préférence l'hexylène glycol ou le carbonate de butylène.

Selon une autre variante de l'invention, le produit peut comprendre en outre un ou des pigments seul ou en mélange. Les pigments convenant selon l'invention sont de préférence le dioxyde de titane.

Le produit selon l'invention peut comprendre en outre un ou des pigments photocatalytiques. Parmi les pigments photocatalytiques convenant selon l'invention on peut citer le dioxyde de titane photocatalytique.

Préférentiellement, le produit selon l'invention ne comprend pas d'argile.

Préférentiellement, le produit selon l'invention ne comprend pas de pyrithione de zinc.

Le produit selon l'invention peut être réalisé en mélangeant à l'eau successivement dans un mélangeur les différents constituants du produit.

Le produit selon l'invention peut être appliqué en 1 seule application. Cela signifie qu'il n'est pas nécessaire d'appliquer plusieurs couches du produit selon l'invention pour obtenir un résultat satisfaisant. Il est à noter qu'un résultat est dit satisfaisant quand la quantité de produit selon l'invention sur un support est comprise entre 0,7 et 3,5 kg/m². 

Le produit selon l'invention présente une quantité de produit après 1 seule application sur un support comprise entre 0,7 et 3,5 kg/m², de préférence comprise entre 1,0 et 3,0 kg/m², plus préférentiellement comprise entre 1,0 et 2,5

kg/m$^2$, encore plus préférentiellement comprise entre 1,5 et 2,0 kg/m$^2$.

Le produit selon l'invention a pour avantage de pouvoir être appliqué selon différentes méthodes, comme par exemple la méthode d'application au couteau, la méthode d'application au rouleau, la méthode d'application par pulvérisation.

Parmi ces méthodes, la méthode d'application préférée est la méthode par pulvérisation, en particulier la méthode d'application à la lance à projeter ou à partir d'un appareil de pulvérisation grand volume basse pression ou encore à partir d'un appareil dit "airless".

Lorsque le produit est appliqué sur son support en une couche, dite couche d'application, l'épaisseur de ladite couche est comprise entre 0,5 mm et 2 mm, de préférence comprise entre 0,7 mm et 1,5 mm, encore plus préférentiellement comprise entre 0,8 mm et 1,3 mm.

Le produit selon l'invention présente après évaporation de l'eau une résistance à l'écoulement de l'air supérieure ou égale à 800 mks rayls (Ns m$^{-3}$), de préférence comprise entre 800 et 6000 mks Rayls, préférentiellement comprise entre 950 et 5000 mks rayls, encore plus préférentiellement comprise entre 1000 et 3500 mks rayls mesurée selon la norme ASTM C522-87.

Après application sur son support, le produit est de préférence laissé à sécher, à température ambiante. Après séchage, le produit selon l'invention est de préférence un produit poreux ou encore permeable à l'air. Par permeable à l'air, on entend un produit présentant une résistance à l'écoulement de l'air supérieure ou égale à 800 mks rayls (Ns m$^{-3}$), de préférence comprise entre 800 et 6000 mks rayls, encore plus préférentiellement comprise entre 1000 et 3500 mks rayls mesurée selon la norme ASTM C522-87.

La présente invention a également pour objet un enduit de finition comprenant le produit selon l'invention tel que décrit ci-dessus.

L'enduit de finition selon l'invention est de préférence un enduit poreux ou encore permeable à l'air. Par permeable à l'air, on entend un enduit présentant une résistance à l'écoulement de l'air supérieure ou égale à 800 mks rayls (Ns m$^{-3}$), de préférence comprise entre 800 et 6000 mks Rayls, préférentiellement comprise entre 950 et 5000 mks rayls, encore plus préférentiellement comprise entre 1000 et 3500 mks rayls mesurée selon la norme ASTM C522-87.

L'enduit de finition selon l'invention est de préférence un enduit ne modifiant pas les propriétés acoustiques dudit support sur lequel il est appliqué.

L'enduit de finition selon l'invention est de préférence un enduit ne modifiant pas la perméabilité à l'air du support sur lequel il est appliqué.

L'enduit selon l'invention peut être employé soit pour ses propriété acoustiques et / ou pour ses propriétés esthétiques.

L'enduit selon l'invention peut être appliqué sur de nombreux supports, notamment par exemple un sol, un mur, une cloison, un plafond, une poutre, un plan de travail, une corniche, et quelque soit le type de matériau du support.

La présente invention a également pour objet un panneau à base de gypse, en particulier une plaque de plâtre, sur lequel est appliqué l'enduit de finition selon l'invention tel que décrit ci-dessus.

Enfin la présente invention a également pour objet l'utilisation d'un enduit de finition selon l'invention pour la fabrication d'éléments pour le domaine de la construction.

Les exemples suivants illustrent l'invention sans en limiter la portée.

## EXEMPLES

**Réactifs utilisés :**

Les réactifs utilisés dans les différentes formulations du produit selon l'invention sont réunis dans le tableau I ci-dessous.

TABLEAU I

| | Dénomination | Nom chimique | Fournisseur |
|---|---|---|---|
| **Solvant** | Eau du robinet | Eau | |
| **Agent Dispersant** | Coatex P90 | Polycarboxylate d'ammonium | Coatex |
| **Agent Mouillant** | Envirogem 360 | Diol | Air products |
| **Anti-mousse** | Clérol PLB847 | | Cognis |
| **Agent Epaississant** | Actigum CS 6 | Scléroglucane | Cargill |
| | Satiaxane CX90T | Gomme de Xanthane | Cargill |

(suite)

|  | Dénomination | Nom chimique | Fournisseur |
|---|---|---|---|
|  | Kelzan RD | Gomme de Xanthane | Kelco |
| Charge monogranulaire | Durcal130 | Carbonate de calcium | Omya |
|  | Béatite 350-630 μm | Carbonate de calcium | Omya |
|  | Poraver 0.5-1 mm | Billes de verre | Poraver |
| Fibres | PP Stavon 18/4 | Fibres de polypropylène | Trevos |
|  | Rhoximat NYL 4 mm | Fibres de polyamide | Rhodia |
| Pigment | Tiona 568 | Dioxyde de titane | Millenium chemicals |
|  | Tiona 595 | Dioxyde de titane | Millenium chemicals |
| Liant | Acronal S790 | Latex styrène/acrylique | BASF |
|  | Acronal S559 | Latex styrène/acrylique | BASF |
| Agent Coalescent | Dowanol PnB | Ether de glycol | Dow chemicals |
| Solvant Lourd | Jeffsol BC | Carbonate de butylène | Hunstmann |
| Biocide | Mergal 723K | Solution d'isothiazolinone et d'un composé d'amine gras | Troy |
|  | Acticide MBS | Isothiazolinone protégé | Thor |

**Matériels :**

- Mélangeur Disperseur Rayneri de laboratoire équipé d'une pâle de dispersion.
- Mélangeur Turbodisperseur modèle Argon AI7.5 équipé d'un arbre mélangeur à vitesse variable de marque Zanelli.
- Lance à projeter : ensemble de projection modèle 6P de marque Europro constitué d'une machine avec une trémie en inox monobloc et un moteur asynchrone couplé à un réducteur, entraînant une pompe à vis volumétrique, associé à un compresseur et à une lance à projeter équipée d'une buse de diamètre 3 mm.

**Mode opératoire : réalisation de l'enduit de l'exemple 1 selon l'invention :**

Dans le bol du mélangeur, 43,49 parties d'eau du robinet sont introduites.

Sous une agitation de 400 tr/min, 0,13 partie d'agent dispersant Coatex P90, 0,11 partie d'agent mouillant Envirogem 360, 0,02 partie d'agent antimousse Clerol PLB847 et 0,63 partie d'agent épaississant Actigum CS6 sont introduites successivement et en 5 minutes.

L'agitation est augmentée progressivement jusqu'à 2500 tr/min tout en ajoutant 45,01 parties de charge monogranulaire Durcal 130, 5.00 parties de pigment dioxyde de titane Tiona 595, 2.00 parties de fibre Rhoximat NYL 0,8 en 20 minutes.

L'agitation est diminuée jusqu'à 1000 tr/min tout en ajoutant 3,00 parties de liant Acronal S790, 0,31 partie d'agent coalescent Dowanol PNB et 0,31 partie de biocide Mergal 723K en 3 minutes.

Les quantités des constituants sont données en pourcentage en poids par rapport au poids total du produit.

**Enduits selon l'invention :**

Différents enduits ont été réalisés, enduits 2 à 13, selon le mode opératoire de l'exemple 1 décrit ci-dessus. Enduits 4-11, et 13 sont selon l'invention. Enduits 2, 3, et 12 ne sont pas selon l'invention. Le tableau II ci-dessous décrit la composition chimique des enduits 1 à 8 et le tableau III décrit la composition chimique des enduits 9 à 15 en pourcentage en poids par rapport au poids total du produit.

TABLEAU II

| Famille | Composé | 1 | 2 | 3 | 4 | 5 |
|---|---|---|---|---|---|---|
| Solvant | Eau | 43.49 | 33.34 | 26.86 | 27.99 | 28.08 |
| Dispersant | Coatex P90 | 0.13 | 0.04 | 0.11 | 0.25 | 0.11 |
| Mouillant | Envirogem 360 | 0.11 | | | | |
| Antimousse | Clérol PLB847 | 0.02 | 0.02 | | | |
| Epaississant | Rhéo 3000 | | | 0.77 | 1.78 | 2.01 |
| | Actigum CS 6 | 0.63 | 0.46 | | | |
| Charge | Beatite 350-630 $\mu$m | | | | | 38.97 |
| | Durcal 130 | 45.01 | 46.10 | 49.88 | 58.02 | |
| | Poraver 0,5-1 | | 10.15 | 11.08 | | |
| Fibre | PP Stavon 18/4 | | | | 1.02 | |
| | Rhoximat NYL 0,8 | 2.00 | | | | |
| Pigment | Tiona 568 | 5.00 | 5.54 | 5.97 | 5.09 | 6.30 |
| Liant | Acronal S790 | 3.00 | 3.69 | 4.69 | 5.09 | 4.58 |
| Coalescent | Dowanol PnB | 0.31 | 0.37 | 0.60 | 0.76 | 0.57 |
| Biocide | Mergal 723K | 0.31 | 0.28 | 0.04 | | |
| | | 100.00 | 100.00 | 100.00 | 100.00 | 80.63 |

TABLEAU III

| Famille | Composé | 6 | 7 | 8 | 9 | 10 | 11 |
|---|---|---|---|---|---|---|---|
| Solvant | Eau | 28.78 | 28.97 | 29.15 | 44.61 | 75.97 | 45.00 |
| Dispersant | Coatex P90 | 0.25 | 0.13 | 0.50 | 0.10 | 0.17 | 0.10 |
| Mouillant | Envirogem 360 | | | | 0.10 | 0.17 | 0.10 |
| Antimousse | Clérol PLB847 | | | | | | |
| Epaississant | Rhéo 3000 | 1.99 | 1.69 | 1.26 | | | |
| | Actigum CS 6 | | | | 1.01 | | |
| | Kelzan RD | | | | | 0.39 | 1.10 |
| Charge | Beatite 350-630 | | 55.79 | | | | |
| | Durcal 130 | 57.57 | | 57.29 | 43.85 | 18.88 | 42.00 |
| Fibre | Fibres PA 4mm | | 1.19 | | | | |
| | PP Stavon | | | 1.01 | | | |
| | PP (2.2/4) | 0.99 | | | | | |
| | Axilat NYL0,8 | | | | 2.02 | 0.86 | 2.00 |
| | Rhoximat NYL 0,8 | | | | | | |
| Pigment | Tiona 568 | 496 | 6.44 | 5.03 | 5.04 | 2.15 | 5.00 |
| Liant | Acronal S790 | 4.96 | 5.15 | 503 | 3.02 | 1.29 | |
| | Acronal S559 | | | | | | 4.30 |
| Coalescent | Dowanol PnB | 0.50 | 0.64 | 0.75 | 0.25 | 0.13 | |
| Solvant Lourd | Jeffsol BC | | | | | | 0.40 |

(suite)

| Famille | Composé | 6 | 7 | 8 | 9 | 10 | 11 |
|---|---|---|---|---|---|---|---|
| Biocide | Mergal 723K | | | | | | |
| | Acticide MKE (N) | | | | | | |
| | Acticide MBS | | | | | | |
| | | 100.00 | 100.00 | 100.00 | 100.00 | 100.00 | 100.00 |

**Mesure de la perméabilité à l'air de chaque enduit :**

La perméabilité à l'air est estimée à partir d'une mesure de résistivité à l'air. Ces mesures sont faites grâce à un résistivimètre communément appelé ohmmètre. La différence de pression en inches d'eau est mesurée pour un débit d'air de 17% entre l'échantillon et une plaque de verre témoin au travers d'une empreinte de 5 cm de diamètre. A chaque fois, 5 mesures correspondantes à 5 valeurs différentes de débit d'air sont réalisées. Plus la valeur obtenue est grande, plus on résiste au passage de l'air, l'échantillon sera alors moins poreux et moins perméable.

$$\text{(Perméabilité mks rayls)} = (\Delta P_{inchH20} \times 149.4) / 1.49 \times 10^5 \times (5.10^{-2})^2 / 4$$

Les résultats sont présentés dans le tableau IV suivant :

TABLEAU IV

| enduits | 1 | 2 | 3 | 4 | 5 | 6 | 7 | 8 | 9 | 10 | 11 |
|---|---|---|---|---|---|---|---|---|---|---|---|
| Perméabilité mks rayls | 2834 | 3169 | 1142 | 1122 | 2027 | 984 | 1732 | 866 | 2421 | 1771 | 1899 |

Les enduits 1 à 11 sont perméables à l'air.

**Essai de mesures acoustiques :**

Les enduits 12 et 13 ont été appliqués sur des plaques de plâtre ayant des propriétés acoustiques. Ces enduits ont été appliqués à l'aide d'une lance à projeter (Vitesse de pompe : 2,5 et pression d'atomisation : 30 psi).

L'ensemble est nommé système.

La méthode de mesure du coefficient de réduction du bruit (NRC) est la méthode décrite dans la norme ASTM C423-02A, en utilisant une salle dont le volume est de 114m3.

Des mesures acoustiques ont été réalisées sur ces systèmes.

TABLEAU V

| | enduits | 12 | 13 |
|---|---|---|---|
| Solvant | Eau | 33.34 | 45.60 |
| Dispersant | Coatex P90 | 0.04 | 0.10 |
| Mouillant | Envirogem 360 | | 0.10 |
| Antimousse | Clérol PLB847 | 0.02 | 0.10 |
| Epaississant | Actigum CS 6 | 0.46 | |
| | Kelzan RD | | 0.60 |
| Charge | burcal 130 | 46.10 | 42.14 |
| | Poraver 0,5-1 | 10.15 | |
| Fibre | Rhoximat NYL 0,8 | | 2.01 |
| Pigment | Tiona 568 | 5.54 | |

(suite)

| | enduits | **12** | **13** |
|---|---|---|---|
| | Tiona 595 | | 5.02 |
| Liant | Acronal S790 | 3.69 | |
| | Acronal S559 | | 4.32 |
| Coalescent | Dowanol PnB | 0.37 | |
| Biocide | Mergal 723K | 0.28 | |
| | Acticide MKE (N) Acticide MBS | | 0.25 |
| | | | 0.19 |
| | | 100.00 | 100.00 |
| | | | |
| Poids d'application | g/m$^2$ | 918 | 1012 |
| Perméabilité | mks rayls | 2116 | |
| NRC plaque seule | | 0.55 | 0.8 |
| NRC plaque + enduit | | 0.55 | 0.75 |

Les enduits 12 et 13 sont perméables à l'air, et ne modifient pas ou très peu les propriétés acoustiques du support sur lesquels ils sont appliqués. En effet lorsque la plaque de plâtre non enduite présente un NRC de 0,55, la même plaque enduite avec l'enduit 12 (système) présente un NRC de 0,55. De même, lorsque la plaque de plâtre non enduite présente un NRC de 0,80, la même plaque enduite avec l'enduit 13 (système) présente un NRC de 0,75.

**Revendications**

1. Produit comprenant en pourcentage en poids par rapport au poids total du produit, au moins

   - 25 à 80 % d'eau ;
   - 0,1 à 5 % d'agent épaississant;
   - 0,01 à 0,8 % d'agent dispersant ;
   - 10 à 60 % de charge monogranulaire dont le $D_{50}$ est supérieur ou égal à 100 $\mu$m, monogranulaire signifiant que la représentation graphique de la distribution granulométrique de la taille des particules (pourcentage en volume en fonction de la taille) ne présente qu'un seul pic (une seule population) ;
   - 0,5 à 6 % de liant ;

   et ne comprenant ni d'agent moussant ni des charges fines dont le diamètre médian $D_{50}$ est strictement inférieur à 100 $\mu$m.

2. Produit selon la revendication 1 **caractérisé en ce qu'**il comprend en outre de 0,001 à 10 % d'agent antimousse.

3. Produit selon la revendication 1 **caractérisé en ce qu'**il comprend 0,5 à 1,5 % d'agent épaississant.

4. Produit selon la revendication 1 **caractérisé en ce qu'**il comprend de 0,1 à 0,5 % d'agent dispersant.

5. Produit selon la revendication 1 **caractérisée en ce qu'**il comprend de 35 à 50 % de charge monogranulaire.

6. Produit selon la revendication 1 **caractérisé en ce qu'**il comprend du carbonate de calcium en tant que charge monogranulaire dont le $D_{50}$ est compris entre 100 $\mu$m et 2 mm.

7. Produit selon la revendication 1 **caractérisé en ce qu'**il comprend en outre de 0,1 à 5 % de fibres synthétiques.

8. Produit selon la revendication 1 **caractérisé en ce qu'**il comprend en outre un ou des pigments photocatalytiques.

**9.** Utilisation du produit selon l'une des revendications 1 à 8 comme enduit de finition.

**10.** Utilisation selon la revendication 9 pour la fabrication d'éléments pour le domaine de la construction.

**11.** Panneau à base de gypse sur lequel est appliqué un enduit de finition comprenant le produit selon l'une des revendications 1 à 8.


**Patentansprüche**

**1.** Produkt, umfassend in Gewichtsprozent, bezogen auf das Gesamtgewicht des Produkts, mindestens

- 25 bis 80 % Wasser;
- 0,1 bis 5 % Verdickungsmittel;
- 0,01 bis 0,8 % Dispergiermittel;
- 10 bis 60 % monogranularen Füllstoff, dessen $D_{50}$ größer oder gleich 100 $\mu$m ist, wobei monogranular bedeutet, dass die grafische Darstellung der Korngrößenverteilung der Partikelgröße (Volumenprozentsatz als Funktion der Größe) nur einen einzigen Spitzenwert (eine einzige Population) aufweist;
- 0,5 bis 6 % Bindemittel;

und weder Schaumbildner noch feine Füllstoffe umfassend, deren mittlerer Durchmesser $D_{50}$ ausschließlich kleiner als 100 $\mu$m ist.

**2.** Produkt nach Anspruch 1, **dadurch gekennzeichnet, dass** es außerdem von 0,001 bis 10 % Antischaummittel umfasst.

**3.** Produkt nach Anspruch 1, **dadurch gekennzeichnet, dass** es 0,5 bis 1,5 % Verdickungsmittel umfasst.

**4.** Produkt nach Anspruch 1, **dadurch gekennzeichnet, dass** es von 0,1 bis 0,5 % Dispergiermittel umfasst.

**5.** Produkt nach Anspruch 1, **dadurch gekennzeichnet, dass** es von 35 bis 50 % monogranularen Füllstoff umfasst.

**6.** Produkt nach Anspruch 1, **dadurch gekennzeichnet, dass** es Calciumcarbonat als monogranularen Füllstoff umfasst, dessen $D_{50}$ zwischen 100 $\mu$m und 2 mm liegt.

**7.** Produkt nach Anspruch 1, **dadurch gekennzeichnet, dass** es außerdem von 0,1 bis 5 % synthetische Fasern umfasst.

**8.** Produkt nach Anspruch 1, **dadurch gekennzeichnet, dass** es außerdem ein oder mehrere photokatalytische Pigmente umfasst.

**9.** Verwendung des Produkts nach einem der Ansprüche 1 bis 8 als Deckbeschichtung.

**10.** Verwendung nach Anspruch 9 zur Herstellung von Elementen für den Baubereich.

**11.** Gipsplatte, auf die eine Deckbeschichtung aufgebracht ist, die das Produkt nach einem der Ansprüche 1 bis 8 umfasst.


**Claims**

**1.** A product comprising as a percentage by weight relative to the total weight of the product, at least

- 25 to 80% water;
- 0.1 to 5% thickening agent;
- 0.01 to 0.8% dispersant agent;
- 10 to 60% of monogranular filler whose $D_{50}$ is greater than or equal to 100 $\mu$m, where monogranular means that the graphical representation of the particle size distribution (percentage by volume as a function of size) only has a single peak (a single population);
- 0.5 to 6% binder;

and not comprising any foaming agent nor fine fillers whose median diameter $D_{50}$ is strictly less than 100 $\mu$m.

2. The product according to claim 1, **characterized in that** it further comprises from 0.001 to 10% of anti-foaming agent.

3. The product according to claim 1, **characterized in that** it comprises from 0.5 to 1.5% of thickening agent.

4. The product according to claim 1, **characterized in that** it comprises from 0.1 to 0.5% of dispersant agent.

5. The product according to claim 1, **characterized in that** it comprises from 35 to 50% of monogranular filler.

6. The product according to claim 1, **characterized in that** it comprises calcium carbonate as monogranular filler whose $D_{50}$ is comprised between 100 $\mu$m and 2 mm.

7. The product according to claim 1, **characterized in that** it further comprises from 0.1 to 5% of synthetic fibers.

8. The product according to claim 1, **characterized in that** it further comprises one or more photocatalytic pigments.

9. A use of the product according to one of claims 1 to 8 as finishing coat.

10. The use according to claim 9 to produce elements for the field of construction.

11. A gypsum-based wall board onto which a finishing coat comprising the product according to one of claims 1 to 8 is applied.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19614296

- US 5338349 A